**Europäisches Patentamt**

**European Patent Office**

**Office européen des brevets**

(11) Publication number: **0 079 319**
**B1**

(12) **EUROPEAN PATENT SPECIFICATION**

(45) Date of publication of patent specification: **30.12.86**

(21) Application number: **82850207.0**

(22) Date of filing: **21.10.82**

(51) Int. Cl.⁴: **B 24 B 55/00, F 01 C 21/16, F 01 D 15/06**

(54) **A pneumatically powered rotation tool.**

(30) Priority: **21.10.81 SE 8106210**

(43) Date of publication of application:
**18.05.83 Bulletin 83/20**

(45) Publication of the grant of the patent:
**30.12.86 Bulletin 86/52**

(84) Designated Contracting States:
**DE FR GB IT SE**

(56) References cited:
**DE-B-1 941 780**
**US-A-3 749 530**
**US-A-3 923 429**
**US-A-4 103 460**

(73) Proprietor: **Atlas Copco Aktiebolag**
**Nacka**
**S-105 23 Stockholm (SE)**

(72) Inventor: **Berger, Karl Gustav**
**25, Strandpromenaden**
**S-131 50 Saltsjö-Duvnäs (SE)**
Inventor: **Kardén, Karl Gösta**
**11, Östervägen**
**S-131 33 Nacka (SE)**

(74) Representative: **Pantzar, Tord et al**
**c/o Atlas Copco Management Consulting AB**
**Patent Department**
**S-105 23 Stockholm (SE)**

Courier Press, Leamington Spa, England.

EP 0 079 319 B1

## Description

This invention relates to a pneumatically powered rotation tool according to the precharacterising part of claim 1. Such a tool is known from US—A—3 923 429.

A problem concerned with previous pneumatic tools of the above related type is the difficulty in obtaining fast enough acting speed governors. This problem is mainly due to the fact that too big a part of the air supply passage is located downstream of the speed governor. This downstream part of the supply passage acts as a pressure accumulator and supplies the motor with motive pressure air for some period of time after the speed governor has closed the air supply passage. The result is that the motor speed may reach a level substantially above the speed level specified for the speed governor. This occurs when the tool is started without having a working implement, for instance a grinding wheel, attached to the output spindle. In such a case the total mass of the rotating parts of the tool is very small which results in a very rapid motor acceleration. This acceleration lasts beyond the maximum speed level of the governor and causes a substantial overspeed.

The practical problem resulting from the above related operation characteristic refers to rotating power tools provided with overspeed safety means in the form of speed responsive releasable or one-way shiftable valve means. Once activated such an overspeed safety means is not possible to reset without dismantling the tool, and it is very annoying and time consuming to have to dismantle a tool just to reset an overspeed safety device which has been unnecessarily activated. It is important to note that this safety means activation has taken place although the speed governor is in perfect condition and in no need whatsoever for service or repair.

The primary object of the present invention is to create a pneumatically powered rotation tool in which the speed governor action gets a faster response at rapid motor accelerations.

Other objects and advantages will be apparent from the following detailed description and the claims.

On the drawing,

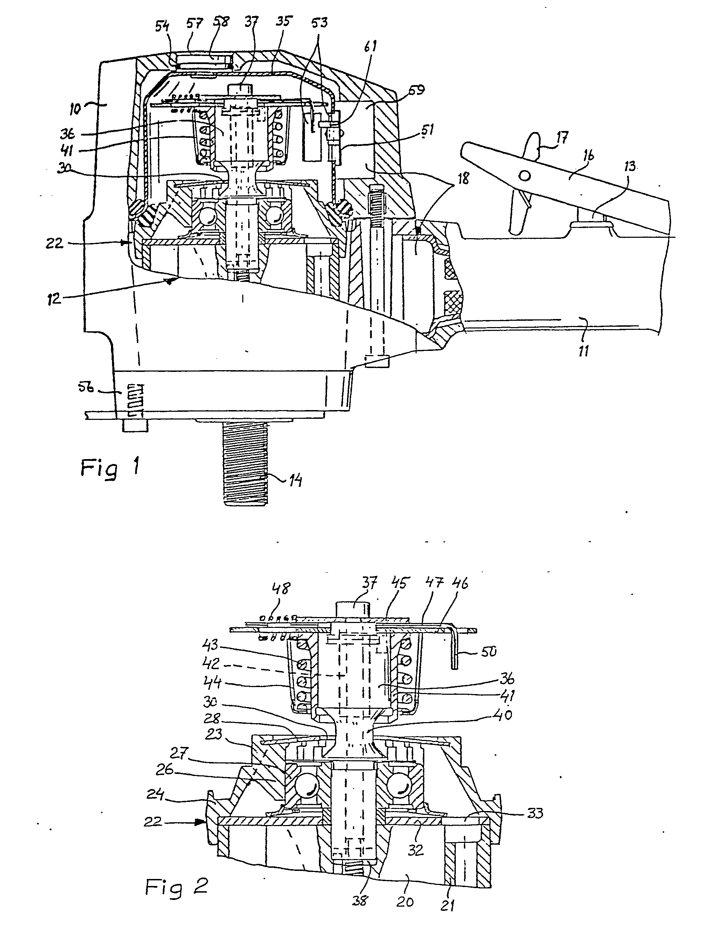

Fig. 1 shows, partly in section, a side view of a pneumatic power tool being an embodiment of the invention.

Fig. 2 shows, on a larger scale, a detail view of the tool in Fig. 1.

In the drawing figures there is shown a portable grinding machine comprising a housing 10, a handle 11, a rotation motor 12 of the sliding vane type and an output shaft 14 drivingly connected to the motor 12.

At its outer end, the handle 11 is provided with a conduit connection (not shown) through which motive pressure air is supplied to the machine. The air supply is controlled by means of a throttle valve 13 which is coupled to a lever 16. A spring biased latch 17 on the lever 16 prevents unintentional starting of the motor 12. The throttle valve communicates with the motor 12 through a supply passage 18.

The motor 12 comprises a rotor 20, a cylinder 21 and two opposite end walls. The rear end wall 22 of the vane motor 12 comprises an annular main body 23 which is formed on one hand with an outer annular shoulder 24 for axial support of the motor 20 in the housing 10 and on the other hand with inner radially extending wings 26 for supporting the rear ball bearing 27 of the motor 12. In the annular main body 23, which is preferably made of a light alloy casting, there is secured a conical steel washer 28, for instance a Belleville spring washer. The latter comprises a central hole 30 which forms an air inlet opening. Apart from this hole 30, the rear wall main body 23 together with the washer 28 form a barrier in the pressure air supply passage 18.

The rear end wall 22 of the motor 12 further comprises a seal disc 32 which is arranged to sealingly cooperate with the rotor 20, and which is formed with a lateral air inlet port 33. Via the space left between the radial wings 26 on the main body 23, the inlet port 33 communicates with the air inlet opening 30 in the steel washer 28.

The tool comprises a speed governor as well as an overspeed release mechanism which are both surrounded by a cup-shaped insert shell 35 and coupled to the rotor 20 by means of an extension hub 36. The latter is attached to the rotor 20 by means of a centrally located screw 37, and is positively coupled to the rotor 20 via axially directed dogs 38.

The extension hub 36 is formed with a waist portion 40 extending through the central opening 30 of the washer 28. The latter forms with the waist portion 40 of the hub 36 an annular air passage communicating with the inlet port 33 of the motor 12.

The speed governor comprises a valve sleeve 41 axially movable on the hub 36 by means of two fly weights 42 (indicated in dotted lines only) and against the load of a spring 43. The latter acts between the governor valve sleeve 41 and a support member 44. On top of the hub 36 there are mounted two discs 45 and 46 to which the support member 44 is connected (not shown).

The valve sleeve 41 is arranged to cooperate with the steel washer 28 to choke or break the air flow through the inlet opening 30.

Between the discs 45, 46 there is slidingly mounted an actuator element 47 which is one of the components forming a releasable shut-off mechanism. The actuator element 47 is radially movable by centrifugal action against the load of a spring 48 inserted in rectangular apertures in the discs 45, 46. At its outer end the actuator element 47 is formed with a release dog 50.

The other component of the releasable shut off mechanism is a valve element 51 mounted on the outside of the cup-shaped shell 35 and controlling a row of openings 53 in the shell 35. The shell 35 forms an insert member which is replaceably mounted in the housing 10. The shell 35 is axially clamped against the housing inner wall by the outer shoulder 24 of the rear end wall 22 of the motor 12. The latter is in turn axially clamped by the front end cover 56 of the housing 10 which is bolted to the housing 10 in a conventional manner.

The housing 10 is provided with an aperture 57 through which a cylindrical button 58 mounted on the shell 35 is exposed. An O-ring 54 forms a seal around the button 58 and prevents pressure air from escaping out into the atmosphere. Between the shell 35 and the housing 10 there is an annular chamber 59 which forms a part of the air supply passage 18. Accordingly, the motor 12 can not be started unless the shell 35 is properly mounted.

The valve element 51 of the overspeed safety mechanism comprises a leaf spring (not shown in detail) rigidly attached at its one end to the insert shell 28 and biased toward closed position by pretensioning. A trip element 61 is mounted on the leaf spring valve element 51 to support the latter in open position. The trip element 61 is arranged to be hit by the release dog 50 of the actuator 47, thereby releasing valve element 51 from its latched open position.

When starting the tool, the throttle valve lever 16 is pressed down and pressure air is supplied through supply passage 18. Thereby, pressure air passes through the openings 53 of the overspeed safety device, through the inlet opening 30 of the motor end wall washer 28, between the radial wings 26 of the motor end wall main body 23 and, finally, into the motor cylinder 21 via the inlet port 33 in the seal disc 32. The motor 12 starts accelerating and, when a certain speed level is reached, the centrifugal action on the fly weights 42 overcomes the load of spring 43 and makes the valve sleeve 41 move downwards toward the washer 28, thereby restricting the air flow through the inlet opening 30.

If the motor speed decreases as a result of a work load being applied on the tool, the spring 43 will again dominate over the fly weight action and move the valve sleeve 41 upwards, thereby increasing the air flow and the motor power.

As long as the speed governor operates correctly, the overspeed safety device remains inactive. If, though, the valve sleeve 41 for some reason should get stuck and the motor speed should raise above the speed range normally covered by the speed governor, the actuator 47 would be moved against the action of spring 48 such that release dog 50 hits the trip element 61 and closes the safety valve 51.

A characteristics feature of the tool according to the invention is that the valve seat forming means for cooperation with the speed governor valve is associated with the rear end wall of the motor. This means that the volume of the air supply passage between the inlet port 33 of the motor and the inlet opening 30 controlled by the governor valve sleeve 41 is small. This results in a very fast governor responding motor, because not even a rapid acceleration of the motor when no working implement is attached to the output shaft 14 would result in overspeed and an unnecessary activation of the safety means.

## Claims

1. A pneumatically powered rotation tool, comprising a housing (10), a vane motor (12) mounted in the housing (10) and drivingly connected at its forward end to an output spindle (14), an air supply passage (18), a speed governor including a centrifugal weight operated valve element (41) movably supported on a rear extension (36) of the rotor (20) of the vane motor (12) said speed governor comprising a stationary barrier-forming means (23, 28) associated with a rear end wall (22) of the vane motor (12), arranged in the air supply passage, and having an air inlet opening (30), and an overspeed safety device (45—48, 50, 51, 53) located in the air supply passage (18) upstream of said speed governor and arranged to be activated to stop or considerably restrict the air supply to the vane motor (12) at motor speeds exceeding the speed level at which the speed governor is normally active to interrupt the air supply to the motor (12), characterized in that the air inlet opening (30) of said barrier-forming means (23, 28) concentrically surrounds the rear extension of the motor rotor (20), and in that said speed governor valve element (41) is arranged to cooperate with said barrier forming means (23, 28) to control the air flow through said opening (30) in response to the motor speed.

2. Rotation tool according to claim 1, wherein said barrier forming means (22, 28) extends substantially transverse to the rotation axis of the motor.

3. Rotation tool according to claims 1 or 2, wherein said speed governor valve element (41) is of tubular shape and having an inner diameter equal to or exceeding the width of said inlet opening (30).

4. Rotation tool according to claim 2, wherein said barrier forming means (23, 28) comprises an annular steel washer (28) the central opening of which forms said inlet opening (30).

5. Rotation tool according to claim 4, wherein said steel washer (28) is a Belleville spring.

6. Rotation tool according to any one of claims 1 to 5, wherein said speed governor valve element (41) is arranged to be moved in a direction toward the motor (12) to restrict or interrupt the air flow through said inlet opening (30).

## Patentansprüche

1. Pneumatisch angetriebenes Drehwerkzeug, bestehend aus einem Gehäuse (10), einem Flügelzellenmotor (12), der im Gehäuse (10) montiert und an seinem vorderen Ende mit einer von ihm angetriebenen Ausgangswelle (14) verbunden ist, einer Luftzufuhrpassage (18), einem Drehzahlregler, der ein durch Fliehgewichte betätigtes Ventilelement (41) enthält, das bewegbar auf einer hinteren Verlängerung (36) des Rotors (20) des Flügelzellenmotors (12) angebracht ist und eine feste, eine Sperre bildende Einrichtung (23, 28) aufweist, die mit einer hinteren Rückwand (22) des Flügelzellenmotors (12) verbunden und in der Luftzufuhrpassage (18) angebracht ist und eine Lufteintrittsöffnung (30) besitzt, und einer Sicherheitsvorrichtung gegen Überdrehzahl (45—48, 50, 51, 53), die in der Luftzufuhrpassage (18) stromaufwärts vom Drehzahlregler angebracht ist und derart betätigbar ist, daß sie die Luftzufuhr zu dem Flügelzellenmotor (12) stoppt oder merklich begrenzt, falls die Motordrehzahl das Drehzahlniveau erreicht, bei dem der Drehzahlregler normalerweise anspricht, um die Luftzufuhr zu dem Motor (12) zu unterbrechen, dadurch gekennzeichnet, daß die Lufteintrittsöffnung (30) der die Sperre bildenden Einrichtung (23, 28) die hintere Verlängerung (36) des Motorrotors (20) konzentrisch umgibt und daß das Drehzahlreglerventilelement (41) so angeordnet ist, daß es mit der die Sperre bildenden Einrichtung (23, 28) zusammenarbeitet, um den Luftstrom durch die Öffnung (30) in Abhängigkeit zur Motordrehzahl zu überwachen.

2. Drehwerkzeug nach Anspruch 1, dadurch gekennzeichnet, daß die die Sperre bildende Einrichtung (22, 28) sich im wesentlichen quer zur Drehachse des Motors erstreckt.

3. Drehwerkzeug nach Anspruch 1 oder 2, dadurch gekennzeichnet, daß das Drehzahlreglerventilelement (41) Rohrform hat und einen Innendurchmesser besitzt, der gleich der oder größer als die Weite der Eintrittsöffnung (30) ist.

4. Drehwerkzeug nach Anspruch 1, dadurch gekennzeichnet, daß die die Sperre bildende Einrichtung (23, 28) eine ringförmige Stahlscheibe (28) enthält, deren zentrale Durchbrechung die Eintrittsöffnung (30) bildet.

5. Drehwerkzeug nach Anspruch 4, dadurch gekennzeichnet, daß die Stahlscheibe (28) eine Tellerfeder ist.

6. Drehwerkzeug nach Anspruch 1 bis 5, dadurch gekennzeichnet, daß das Drehzahlreglerventilelement (41) so eingerichtet ist, daß es in eine Richtung auf den Motor (12) bewegt werden kann, um den Luftstrom durch die Eintrittsöffnung (30) zu verringern oder zu unterbrechen.

**Revendications**

1. Outil rotatif à entraînement pneumatique, comprenant un carter (10), un moteur à palettes (12) monté dans le carter (10) et relié en rotation, par son extrémité avant, à un arbre de sortie (14), un passage d'alimentation d'air (18), un régulateur de vitesse comprenant un élément de soupape à commande par masselotte centrifuge (41) monté de manière à pouvoir se déplacer sur un prolongement arrière (36) du rotor (20) du moteur à palettes (12), ce régulateur de vitesse comprenant des moyens fixes de formation de barrière (23, 28) associés à une paroi d'extrémité arrière (22) du moteur à palettes (12), disposé dans le passage d'alimentation d'air et comportant une ouverture d'entrée d'air (30), et un dispositif de sûreté d'excès de vitesse (45 à 48, 50, 51, 53) placé dans le passage d'alimentation d'air (18) en amont du régulateur de vitesse, et disposé de manière à fonctionner pour stopper ou réduire considérablement l'alimentation d'air du moteur à palettes (12) lorsque la vitesse de ce moteur dépasse le niveau de vitesse pour lequel le régulateur de vitesse fonctionne normalement pour couper l'alimentation d'air du moteur (12), outil rotatif caractérisé en ce que l'ouverture d'entrée d'air (30) des moyens de formation de barrière (23, 28) entourent concentriquement le prolongement arrière du rotor (20) du moteur, et en ce que l'élément de soupape (41) du régulateur de vitesse est disposé de manière à coopérer avec les moyens de formation de barrière (23, 28) pour commander le débit d'air à travers l'ouverture (30) en réponse à la vitesse du moteur.

2. Outil rotatif selon la revendication 1, caractérisé en ce que les moyens de formations de barrière (23, 28) s'étendent transversalement à l'axe du moteur.

3. Outil rotatif selon l'une quelconque des revendications 1 et 2, caractérisé en ce que l'élément de soupape (41) du régulateur de vitesse est de forme tubulaire et présente un diamètre intérieur égal ou supérieur à la largeur de l'ouverture d'entrée (30).

4. Outil rotatif selon la revendication 2, caractérisé en ce que les moyens de formation de barrière (23, 28) sont constitués par une rondelle d'acier annulaire (28) dont l'ouverture centrale constitue l'ouverture d'entrée (30).

5. Outil rotatif selon la revendication 3, caractérisé en ce que la rondelle d'acier (28) est un ressort Belleville.

6. Outil rotatif selon l'une quelconque des revendications 1 à 5, caractérisé en ce que l'élément de soupape (41) du régulateur de vitesse est disposé de manière à se déplacer en direction du moteur (12) pour réduire ou couper le débit d'air à travers l'ouverture d'entrée (30).

Fig 1

Fig 2

1